# EUROPEAN PATENT SPECIFICATION

(11) **EP 4 340 354 B1**
(45) Date of publication and mention of the grant of the patent: **06.05.2026**
(21) Application number: 22807171.8
(22) Date of filing: 16.03.2022
(51) Int. Cl.: E02F 9/20, H04N 7/18

(54) **MONITORING SYSTEM, MONITORING DEVICE, AND CONSTRUCTION MACHINE**
ÜBERWACHUNGSSYSTEM, ÜBERWACHUNGSVORRICHTUNG UND BAUMASCHINE
SYSTÈME DE SURVEILLANCE, DISPOSITIF DE SURVEILLANCE ET MACHINE DE CONSTRUCTION

(30) Priority: 11.05.2021 JP 2021080537
(43) Date of publication of application: 20.03.2024
(73) Proprietor: Hitachi Construction Machinery Co., Ltd., Tokyo 110-0015 (JP)
(72) Inventor: SAITOU, Risa, Tsuchiura-shi, Ibaraki 300-0013 (JP); TANAKA, Masamichi, Tsuchiura-shi, Ibaraki 300-0013 (JP); HIGURASHI, Masaki, Tsuchiura-shi, Ibaraki 300-0013 (JP); TAGO, Hisashi, Tsuchiura-shi, Ibaraki 300-0013 (JP)
(74) Representative: MERH-IP Matias Erny Reichl Hoffmann Patentanwälte PartG mbB
(86) International application number: PCT/JP2022/011784
(87) International publication number: WO 2022/239465

(56) References cited:
- EP-A1- 3 763 885
- WO-A1-2021/024965
- WO-A1-2021/024965
- JP-A- 2013 037 619
- JP-A- 2018 032 134
- JP-A- 2018 114 978
- US-A1- 2020 399 857

## Description

### Technical Field

The present invention relates to a monitoring system and a monitoring device for monitoring a video of the peripheral region of a construction machine captured with a camera of the construction machine, and the construction machine therefor.

### Background Art

In the construction industry, there is demand for a construction machine, a construction management system, and a tool, for example, that can improve productivity or security from the perspectives of eliminating labor shortages or preventing industrial accidents. Meanwhile, there has been provided a video providing system like a dashboard camera that is disposed on a construction machine, and records and distributes a video. According to such a video providing system, it is possible to review operations performed at a construction site or check the progress of a construction work, for example, using the video, which helps a lot to improve productivity or security at the construction site.

According to Patent Literature 1 (see the abstract), an image of a region (1) around a piling construction site is captured with an imaging means (3), and the construction status of a pile (2) is constantly monitored in real time. The imaging means is mounted on a heavy machine (5), and the imaging means of the heavy machine is connected to an external terminal device (6) so as to be able to transmit and receive data to and from the external terminal device. Data (7) on a moving image or a still image of the region around the piling construction site captured with the imaging means of the heavy machine is constantly transmitted to the external terminal device so that the real-time construction status of the pile is visualized with the terminal device based on the data on the moving image or the still image.

A construction machine management system of Patent Literature 2 (see the abstract) includes a traveling body, a work implement connected to the traveling body, a maneuvering region provided in the traveling body, a drive control unit that controls the operations of the work implement and the traveling body, an operation unit that is arranged in the maneuvering region and operates the work implement, a maneuvering seat that is arranged in the maneuvering region and on which an operator is seated, a connection terminal that is arranged in the maneuvering region and is connected to a portable terminal, a vehicle body control unit that communicates with the portable terminal and controls each unit, and a storage unit that stores authentication information. When the portable terminal is connected to the connection terminal, the vehicle body control unit checks authentication information transmitted from the portable terminal against the authentication information stored in the storage unit. If the two authentication information match, an action to be taken in response to an input operation is determined to be executable. If the two information do not match, the operations of the work implement and the traveling body are prohibited.
Patent Literature 3 discloses a shovel, which is connected to an external management device in a communication manner, which comprises an engine, and is configured to receive a first password as authentication information issued by the management device, and allow the engine to start on the basis of the authentication result by the first password.

### Citation List

### Patent Literature

Patent Literature 1: JP 2019-193062 A
Patent Literature 2: JP 2018-114978 A
Patent Literature 3: WO 2021/024965 A1

### Summary of Invention

### Technical Problem

As described above, according to Patent Literature 1, the data (7) on a moving image or a still image of the region (1) around the piling construction site captured with the imaging means (3) of the heavy machine (5) is constantly transmitted to the external terminal device (6) so that the real-time construction status of the pile (2) is visualized with the terminal device based on the image (see the abstract). However, Patent Literature 1 describes neither a specific connection between the imaging means provided on the heavy machine and the external terminal device, nor a specific authentication method or the like, and thus has a problem with the handling of the image data. In particular, the image of the region around the construction site includes an operator's face, and conveys the progress of the construction work at the construction site, for example, which means that the data has attributes close to (personal) information that should be owned by the manager of the construction site. Thus, leakage of the data to outsiders needs to be avoided.

Although Patent Literature 2 discloses an authentication method, the system of Patent Literature 2 requires a contact (i.e., a physical contact) between the connection terminal in the maneuvering region and the portable terminal during authentication (see the abstract). Therefore, a video or an image (i.e., a moving image or a still image; hereinafter referred to as a "video etc." or a "video") of the construction machine is difficult to use for the purpose of performing monitoring with an external monitoring device (e.g., the portable terminal).

The present invention has been made in view of the foregoing problems, and it is an object of the present invention to provide a monitoring system, a monitoring device, and a construction machine each capable of improving the convenience for a user during monitoring while ensuring security related to the leakage of video data of a peripheral region.

### Solution to Problem

The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. To achieve the foregoing object, a monitoring system according to the present invention is adapted to allow a video of a peripheral region of a construction machine to be displayed on a monitoring device located outside the construction machine, in which the construction machine includes a first camera that images the peripheral region of the construction machine, a video recording device that records a moving image or a still image captured by the first camera as a video of the peripheral region, a first wireless communication device that transmits to the monitoring device or an external server the video of the peripheral region recorded on the video recording device, a first authentication-related information display portion arranged outside an operator's cab of the construction machine, and displaying first authentication-related information related to one of identification information or a password for providing the video of the peripheral region, and a second authentication-related information display portion arranged in the operator's cab, and displaying second authentication-related information related to another of the identification information or the password for providing the video of the peripheral region, the monitoring device includes a second wireless communication device that communicates with the construction machine or the external server, a display device that displays the video of the peripheral region received via the second wireless communication device, and a monitoring control device, and the monitoring control device causes the display device to display an authentication screen for entering identification information and a password for receiving the video of the peripheral region, and a video display screen that displays the video of the peripheral region when the identification information and the password entered on the authentication screen respectively match true identification information and a true password.

According to the present invention, the first and second authentication-related information, which are respectively related to the identification information (ID) and the password for allowing the monitoring device to receive a video of the peripheral region of the construction machine, are both displayed on the construction machine. Therefore, a user of the monitoring device is able to obtain the identification information and the password relatively easily, which can improve the convenience for the user.

### Advantageous Effects of Invention

The present invention can improve the convenience for a user during monitoring while ensuring security related to the leakage of video data of a peripheral region.

### Brief Description of Drawings

Fig. 1 is a configuration diagram schematically illustrating the overall configuration of a monitoring system according to an embodiment of the present invention.
Fig. 2 is a configuration diagram schematically illustrating the internal configuration of each unit in the monitoring system according to the embodiment.
Fig. 3 is a front view schematically illustrating a first product label of the embodiment.
Fig. 4 is a front view schematically illustrating a video recording unit including a second product label of the embodiment.
Fig. 5 is a view illustrating an example of the switching of a display screen on a portable terminal of the embodiment.
Fig. 6 is a view illustrating an example of a construction machine list screen of the embodiment.
Fig. 7 is a view illustrating a first example of a new construction machine registration screen of the embodiment.
Fig. 8 is a view illustrating an example of a PIN reading screen of the embodiment.
Fig. 9 is a view illustrating an example of a communication address reading screen of the embodiment.
Fig. 10 is a view illustrating a second example of the new construction machine registration screen of the embodiment.
Fig. 11 is a view illustrating an example of a monitoring management screen of the embodiment.
Fig. 12 is a view illustrating an example of a password changing screen of the embodiment.

### Description of Embodiments

### <A. Embodiment>

### [A-1. Configuration]

### (A-1-1. Overall configuration)

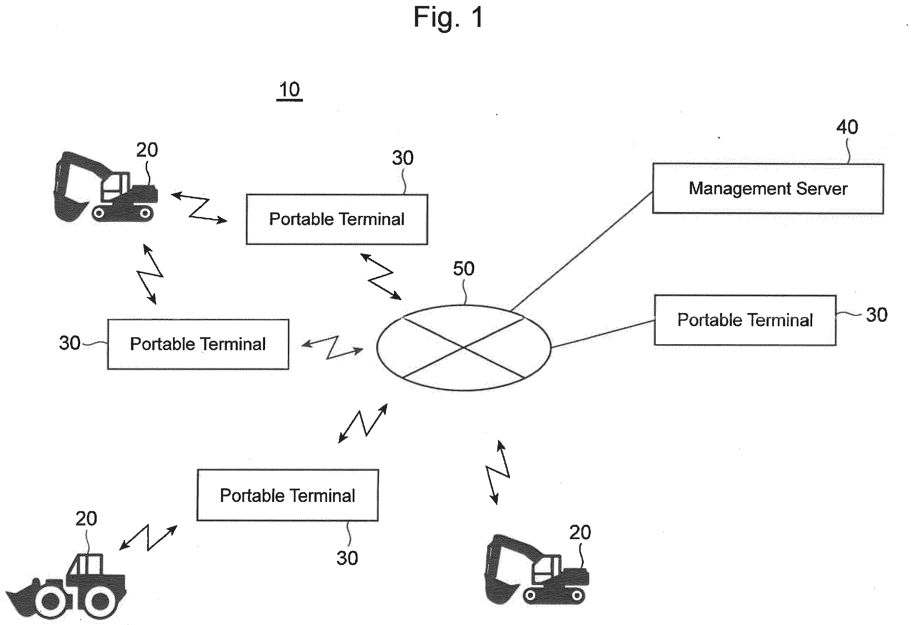

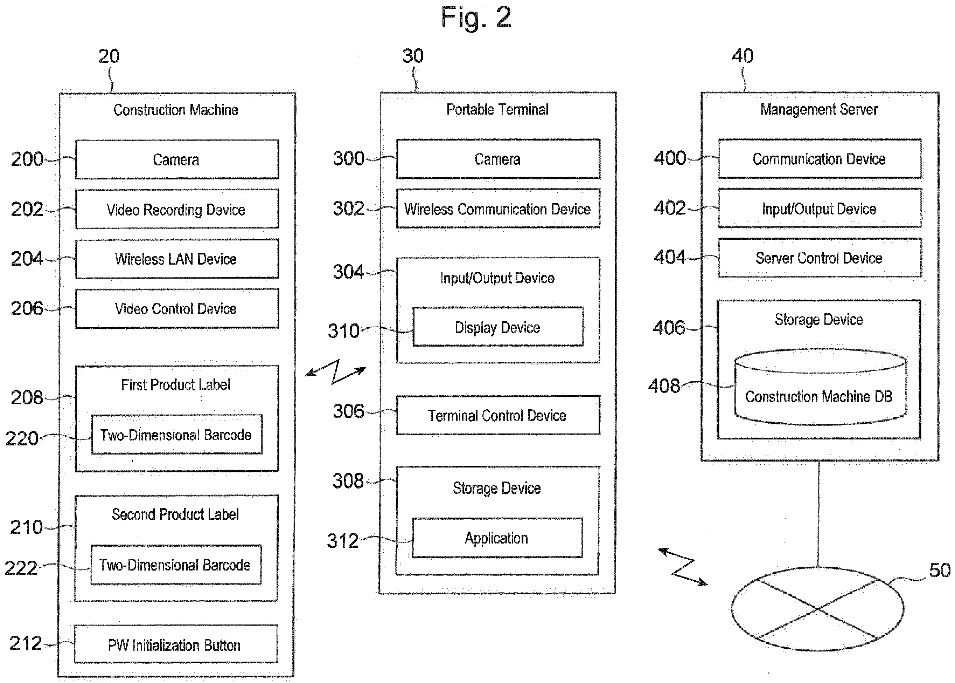

Fig. 1 is a configuration diagram schematically illustrating the overall configuration of a monitoring system 10 according to an embodiment of the present invention. Fig. 2 is a configuration diagram schematically illustrating the internal configuration of each unit in the monitoring system 10 according to the present embodiment. The monitoring system 10 includes a plurality of construction machines 20, a plurality of portable terminals 30, and a management server 40. The monitoring system 10 is a system that allows a video of a peripheral region of the construction machine 20 captured from the construction machine 20 to be displayed on the portable terminal 30 located outside the construction machine 20. Note that as described previously, videos in the present invention include both moving images and still images, and any object that can encompass the concept of an image shall be collectively referred to as a video or a video etc.

The construction machine 20 and the portable terminal 30 can communicate with each other via a communication network 50, and also, the portable terminal 30 and the management server 40 can communicate with each other via the communication network 50. The construction machine 20 and the management server 40 can also communicate with each other via the communication network 50. As the communication network 50, a wireless communication network 50 (i.e., a wireless LAN), such as Wi-Fi, or a wired communication network, such as a communication cable, can be used.

### (A-1-2. Construction machine 20)

Examples of the construction machine 20 include a hydraulic excavator, a wheel loader, and a bulldozer. As illustrated in Fig. 2, the construction machine 20 includes a first camera 200, a video recording device 202, a first wireless communication device 204, a video control device 206, a first product label 208, a second product label 210, and a password initialization button 212.

The first camera 200 is arranged in the body of the construction machine 20, for example, and images the peripheral region of the construction machine 20 (e.g., a region ahead of its body). It is also possible to provide one construction machine 20 with a plurality of first cameras 200 so as to capture images in different directions. The video recording device 202 includes a nonvolatile memory element (e.g., a hard disk or a flash memory; not illustrated), and records a moving image or a still image captured with the first camera 200 as a video of the peripheral region. The video of the peripheral region may be not only a video captured with the first camera 200 as is, but also a video etc. obtained by combining videos of the peripheral region captured in a plurality of directions into one video with the video control device 206 such that the resulting video provides a panoramic view of the peripheral region as seen from the outside of the body of the construction machine 20, or a composite video etc. obtained by combining videos etc. captured in a plurality of directions into one video etc.

The first wireless communication device 204 (hereinafter also referred to as a "wireless LAN device 204") transmits to the portable terminal 30 (or the management server 40) a video of the peripheral region recorded on the video recording device 202 (i.e., a recorded video) and a video of the peripheral region captured with the first camera 200 (i.e., a real-time video). Examples of the real-time video herein may include a video etc. that has just been recorded on the video recording device 202. The wireless LAN device 204 also functions as an access point of the wireless LAN (Local Area Network).

The wireless LAN device 204 has an authentication function for allowing an external device, such as the portable terminal 30, to access the wireless LAN device 204. That is, the wireless LAN device 204 receives from the external device an access identification number (i.e., an access ID) and an access password to allow the external device to access the wireless LAN device 204. Then, if the received access ID and access password respectively match the true access ID and the true access password (which have been held in the wireless LAN device 204 in advance), the wireless LAN device 204 determines that authentication is successful, and permits the transmission of the video of the peripheral region to the external device.

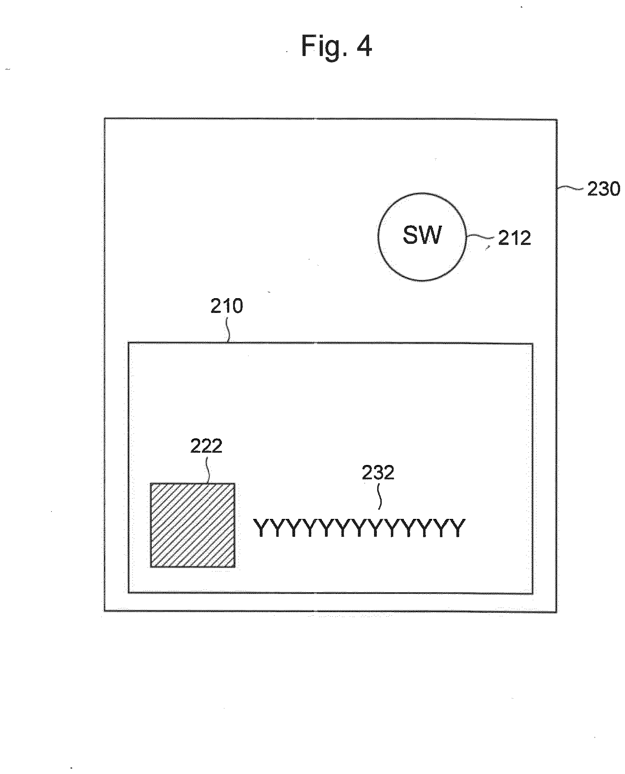

The video control device 206 controls the first camera 200, the video recording device 202, and the first wireless communication device 204. In the present embodiment, the video recording device 202, the first wireless communication device 204, and the video control device 206 are configured as a single video recording unit 230 (Fig. 4) integrating such devices.

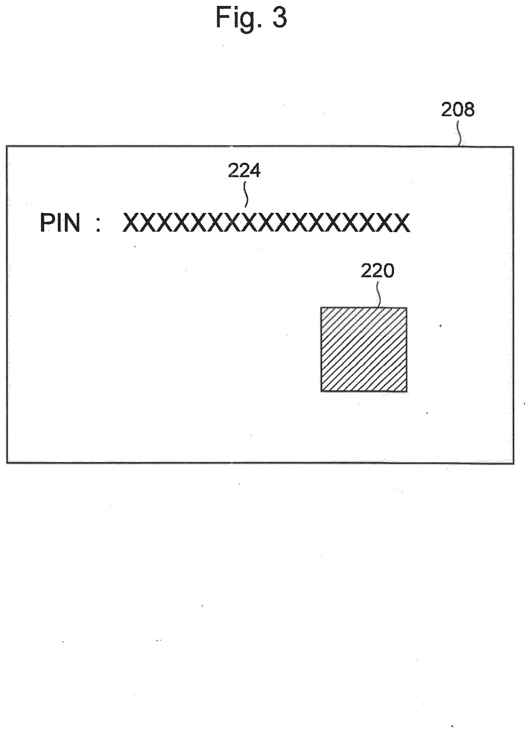

Fig. 3 is a front view schematically illustrating the first product label 208 of the present embodiment. The first product label 208 (i.e., a first authentication-related information display portion) displays first authentication-related information, such as the model, type, and product identification number (PIN) of the construction machine 20, and the manufacturer name, and is arranged on a part (e.g., the body) of the construction machine 20 outside an operator's cab (not illustrated) of the construction machine 20. The first product label 208 is attached to a position outside the operator's cab, such as the outer face of the vehicle body or the rear face of an engine cover, for example, that can be viewed by a user of the monitoring system 10 from the outside of the construction machine 20.

The first product label 208 in Fig. 3 includes a PIN display 224, while the display of the model, type, and the like of the construction machine 20 is omitted. The PIN of the construction machine 20 includes 17 alphanumeric characters representing a manufacturer identification code, a machine descriptor section, and a machine indicator section, for example. The Japanese Industrial Standards (JIS) provides that overlapped numbers should not be issued as the PIN for 30 years.

In the present embodiment, the first product label 208 also displays a two-dimensional barcode 220 representing the PIN of the construction machine 20. The PIN of the construction machine 20 is used as information related to the access ID for the wireless LAN device 204. That is, the access ID of the present embodiment includes a combination of the PIN of the construction machine 20 and a code (i.e., a type code) representing the type of the construction machine 20. The type code indicates "_SH" if the construction machine 20 is a hydraulic excavator, for example.

Fig. 4 is a front view schematically illustrating the video recording unit 230 including the second product label 210 of the present embodiment. The second product label 210 (i.e., a second authentication-related information display portion) displays second authentication-related information, such as the model, type, and product identification number (PIN) of the video recording unit 230, the communication address, and the manufacturer name. The second product label 210 is arranged on the front face of a housing of the video recording unit 230 in the operator's cab (not illustrated) of the construction machine 20 (Fig. 4).

The second product label 210 in Fig. 4 includes a communication address display 232, while the display of the model, type, and the like of the video recording unit 230 is omitted. In the present embodiment, the second product label 210 also displays a two-dimensional barcode 222 representing the communication address of the wireless LAN device 204. The communication address of the present embodiment is a MAC (Media Access Control) address. The communication address (i.e., the MAC address) is used as is as the initial access password for the wireless LAN device 204 of the present embodiment.

The password initialization button 212 (hereinafter also referred to as an "initialization button 212") is a button for initializing the access password for the wireless LAN device 204. As illustrated in Fig. 4, the initialization button 212 is arranged side-by-side with the second product label 210 on the front face of the housing of the video recording unit 230.

### (A-1-3. Portable terminal 30)

The portable terminal 30 (i.e., a monitoring device) receives from the wireless LAN device 204 of the construction machine 20 a video of the peripheral region of the construction machine 20, and displays the received video. The portable terminal 30 is a terminal that can be carried, such as a smartphone, a tablet personal computer (i.e., a tablet PC), or a notebook PC, for example. As illustrated in Fig. 2, the portable terminal 30 includes a second camera 300, a second wireless communication device 302, an input/output device 304, a terminal control device 306, and a terminal storage device 308.

The second camera 300 can be used to image the two-dimensional barcode 220 of the first product label 208 and the two-dimensional barcode 222 of the second product label 210. The second wireless communication device 302 can communicate with the wireless LAN device 204 of the construction machine 20 and with the management server 40. The input/output device 304 receives data from a user of the portable terminal 30, and outputs data to the user. The input/output device 304 includes a display device 310 (e.g., a touch panel) that displays a video of the peripheral region of the construction machine 20.

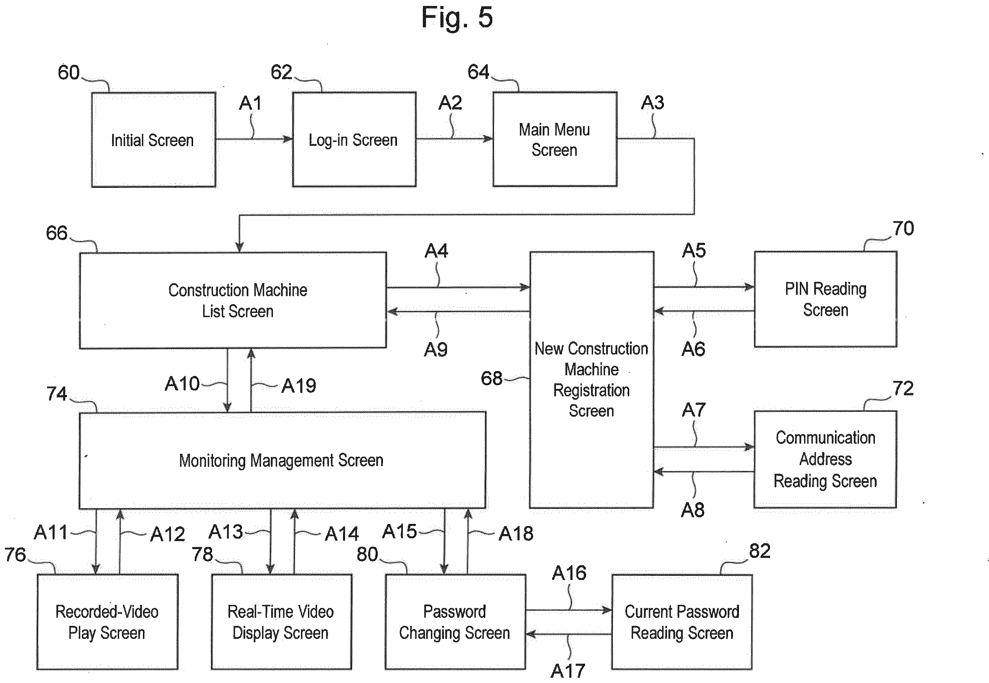

The terminal control device 306 (i.e., a monitoring control device) executes an application 312 installed on the portable terminal 30 to control the entire portable terminal 30. The terminal storage device 308 stores the application 312 to be executed by the terminal control device 306 and data, and includes a nonvolatile memory and a volatile memory. As described below with reference to Figs. 5 to 12, the application 312 is used to monitor a video (i.e., a recorded video or a real-time video) of the peripheral region of the construction machine 20 with the portable terminal 30. The application 312 is downloaded from the management server 40, for example. Alternatively, the application 312 may be individually distributed by e-mailing, for example.

### (A-1-4. Management server 40)

The management server 40 provides the application 312, and manages data on the construction machines 20, for example. As illustrated in Fig. 2, the management server 40 includes a communication device 400, an input/output device 402, a server control device 404, and a server storage device 406.

The communication device 400 communicates with the portable terminal 30 (and the construction machine 20). The input/output device 402 is a device that receives data from a user, and outputs data to the user, and includes a keyboard, a mouse, and a display device (none of which is illustrated), for example. The server control device 404 controls the entire management server 40 using software and data stored in the server storage device 406. The server storage device 406 includes a volatile memory and a nonvolatile memory. The server storage device 406 includes a construction machine database 408 (hereinafter referred to as a "construction machine DB 408"). The construction machine DB 408 stores the PIN of each construction machine 20 and the model name and the machine number of the construction machine 20 corresponding to the PIN of the construction machine 20 in association with each other.

### [A-2. Usage in the present embodiment]

Next, the usage of the monitoring system 10 of the present embodiment will be described mainly with reference to the portable terminal 30. As described above, in the monitoring system 10 of the present embodiment, a user of the portable terminal 30 is able to check a video of the peripheral region of the construction machine 20, using the portable terminal 30.

Fig. 5 is a view illustrating an example of the switching of a display screen on the portable terminal 30 of the present embodiment. When the user of the portable terminal 30 selects (i.e., taps) an icon (not illustrated) for starting the application 312, the terminal control device 306 starts the application 312 of the terminal storage device 308, and causes the display device 310 to display an initial screen 60. When a log-in button (not illustrated) is selected on the initial screen 60, the terminal control device 306 causes the display device 310 to display a log-in screen 62 (indicated by an arrow A1 in Fig. 5). When the user of the portable terminal 30 enters a log-in ID and a log-in password and selects an "Enter" button (not illustrated) on the log-in screen 62, the terminal control device 306 causes the display device 310 to display a main menu screen 64 (indicated by an arrow A2 in Fig. 5).

On the main menu screen 64, various functions that can be executed by the application 312 can be selected. For example, monitoring of a video of the peripheral region of the construction machine 20 can be selected as one function. When the user selects a button (not illustrated) for monitoring a video of the peripheral region, the terminal control device 306 causes the display device 310 to display a construction machine list screen 66 (indicated by an arrow A3 in Fig. 5).

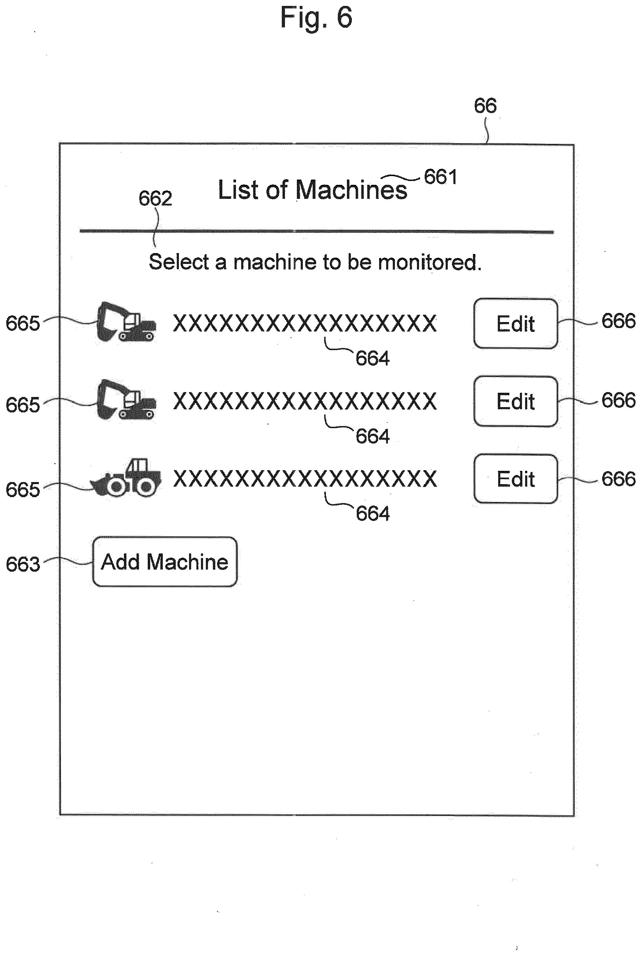

Fig. 6 is a view illustrating an example of the construction machine list screen 66 of the present embodiment. The construction machine list screen 66 is a screen for managing construction machines 20 for each of which a video of a peripheral region is to be obtained. As illustrated in Fig. 6, the construction machine list screen 66 includes a screen title 661, an operation description 662, a new addition button 663, construction machine descriptions 664, construction machine icons 665, and editing buttons 666. The screen title 661 indicates the overview of the construction machine list screen 66, and displays "[L]ist of Machines" in the example of Fig. 6. The operation description 662 is the description of an operation that can be performed by the user, and displays "[S]elect a machine to be monitored." in the example of Fig. 6.

The new addition button 663 is a button for adding a construction machine 20 (that is, a construction machine 20 as a monitoring target for which a video of a peripheral region is to be monitored) to be displayed on the construction machine list screen 66. When the user selects the new addition button 663, the terminal control device 306 causes the display device 310 to display a new construction machine registration screen 68 (indicated by an arrow A4 in Fig. 5).

Each construction machine description 664 represents information on the construction machine 20 for which monitoring of a video of a peripheral region can be performed. The PIN of the construction machine 20 is used as the information herein, for example. When information of the target construction machine 20 is stored in the construction machine DB 408 of the management server 40, the terminal control device 306 may obtain the information from the management server 40, and display, instead of the PIN of the construction machine 20, the model name and the machine number of the construction machine 20 corresponding to the PIN. The timing of obtaining information on the model name and the machine number from the management server 40 may be, for example, the timing of displaying the model name and the machine number, the timing of registering information on the new construction machine 20, or the timing of starting the application 312. The information on the model name and the machine number obtained from the management server 40 may be stored in the terminal storage device 308 of the portable terminal 30, and used at each display timing.

Each construction machine icon 665 is an icon representing the type of the construction machine 20 corresponding to the construction machine description 664 paired with the construction machine icon 665. The type of the construction machine icon 665 is selected based on the type code included in the PIN of the construction machine 20, for example. Alternatively, it is also possible to determine the type of the construction machine icon 665 by obtaining the type of the construction machine 20 from the management server 40 based on the PIN of the construction machine 20. When the user of the portable terminal 30 selects (i.e., double-taps) the construction machine description 664 or the construction machine icon 665, the terminal control device 306 starts a process for monitoring a video of the peripheral region of the corresponding construction machine 20.

Each editing button 666 is a button for editing information on the registered construction machine 20. When the user taps the editing button 666, the terminal control device 306 displays an editing screen (not illustrated). On the editing screen, the PIN of the construction machine 20, the communication address, the access ID, and the access password can be displayed or edited.

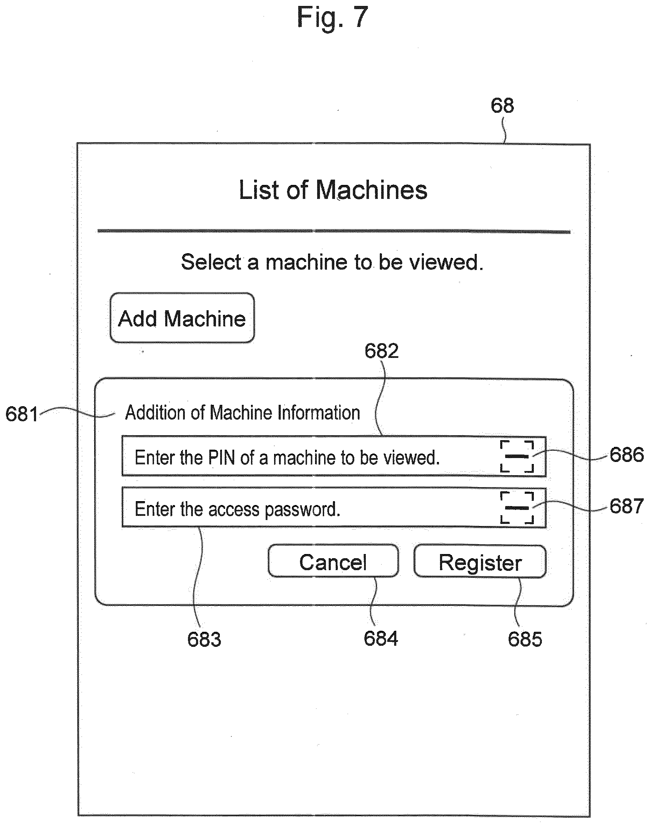

Fig. 7 is a view illustrating a first example of the new construction machine registration screen 68 of the present embodiment. As described above, when the user selects (i.e., taps) the new addition button 663 on the construction machine list screen 66 (Fig. 6), the new construction machine registration screen 68 is displayed on the display device 310 (indicated by the arrow A4 in Fig. 5). The new construction machine registration screen 68 (hereinafter also referred to as a "new registration screen 68") is a screen for entering the PIN of the construction machine 20 as a new monitoring target, and the communication address of the wireless LAN device 204 (i.e., information related to the access ID and information related to the access password). The new registration screen 68 includes a screen title 681, a PIN entry field 682, a communication address entry field 683, a cancel button 684, and a registration button 685.

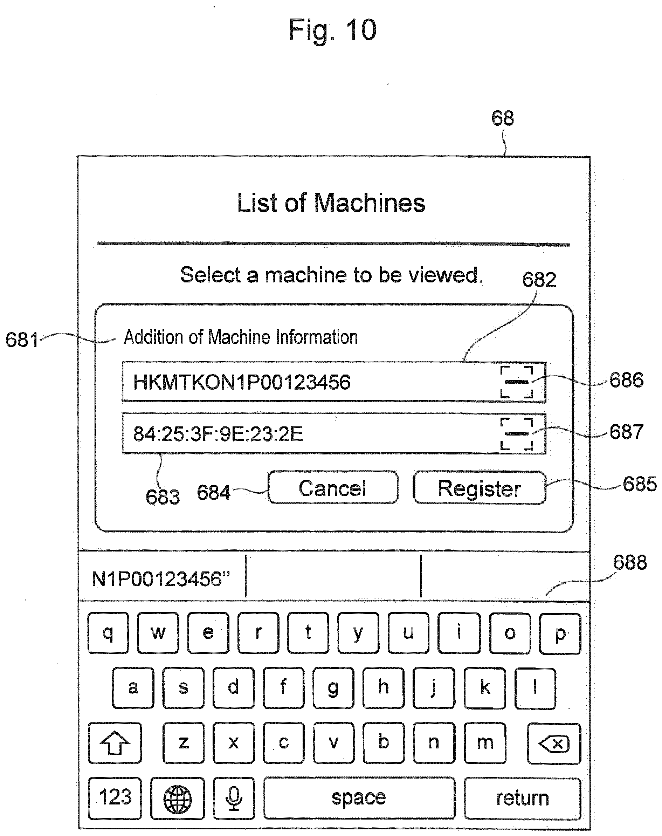

The screen title 681 indicates the overview of the new registration screen 68, and displays "[A]ddition of Machine Information" in the example of Fig. 7. The PIN entry field 682 is a field for entering the PIN (i.e., information related to the access ID) of the construction machine 20 as a new monitoring target. When the user selects (i.e., taps) the PIN entry field 682, the terminal control device 306 displays a keyboard display 688 (Fig. 10) below the new registration screen 68. The user is able to enter the PIN by selecting each button in the keyboard display 688. As described above, the PIN of the construction machine 20 is displayed on the first product label 208. A first barcode entry button 686 is displayed at the right end of the PIN entry field 682. When the user selects (i.e., taps) the first barcode entry button 686, the terminal control device 306 causes the display device 310 to display a PIN reading screen 70 (indicated by an arrow A5 in Fig. 5).

The communication address entry field 683 is a field for entering the communication address (i.e., information related to the access password) of the wireless LAN device 204 of the construction machine 20 as a new monitoring target. When the user selects (i.e., taps) the communication address entry field 683, the terminal control device 306 displays the keyboard display 688 (Fig. 10) below the new registration screen 68. The user is able to enter the access password by selecting each button in the keyboard display 688. A second barcode entry button 687 is displayed at the right end of the communication address entry field 683. When the user taps the second barcode entry button 687, the terminal control device 306 causes the display device 310 to display a communication address reading screen 72 (indicated by an arrow A7 in Fig. 5).

The cancel button 684 is a button for interrupting the input on the new construction machine registration screen 68. The registration button 685 is a button for completing the input on the new construction machine registration screen 68. The registration button 685 cannot be selected when the PIN or the communication address is not entered, and can be selected when both the PIN and the communication address are entered. When the cancel button 684 or the registration button 685 is tapped, the screen is switched back to the construction machine list screen 66 (indicated by an arrow A9 in Fig. 5). Alternatively, when the registration button 685 is tapped, the screen may be switched to a monitoring management screen 74 described below.

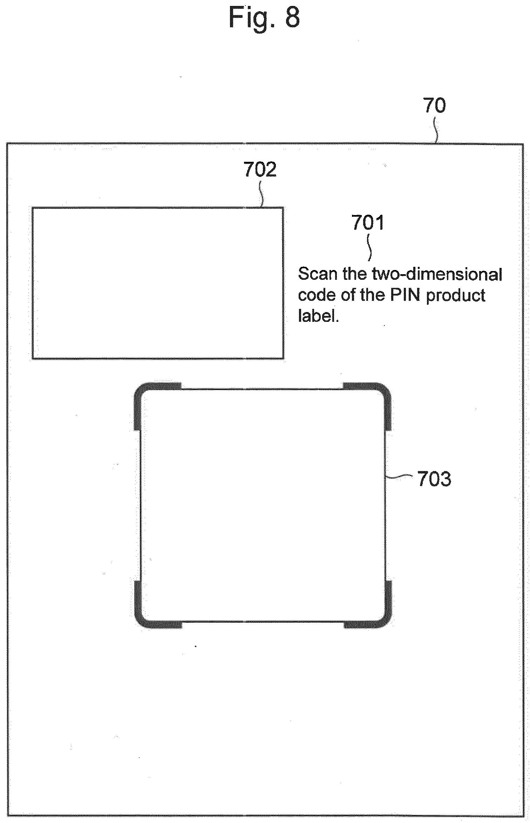

Fig. 8 is a view illustrating an example of the PIN reading screen 70 of the present embodiment. As described above, when the user selects (i.e., taps) the first barcode entry button 686 on the new construction machine registration screen 68 (Fig. 7), the PIN reading screen 70 is displayed on the display device 310 (indicated by the arrow A5 in Fig. 5). The PIN reading screen 70 is a screen for automatically entering the PIN of the construction machine 20 as a new monitoring target using the two-dimensional barcode 220 (Fig. 3) of the first product label 208 on the construction machine 20. The PIN reading screen 70 includes an operation description 701, an operation description image 702, and a two-dimensional barcode reading field 703.

The operation description 701 is the description of an operation that can be performed by the user, and displays "[S]can the two-dimensional code of the PIN product label." in the example of Fig. 8. The operation description image 702 is an image representing the position of the two-dimensional barcode 220 to be read (the illustration of the image is omitted in Fig. 8). The two-dimensional barcode reading field 703 is a portion where a video etc. captured with the second camera 300 is displayed. The video etc. captured with the second camera 300 may also be displayed around the reading field 703. The terminal control device 306 determines if there is the two-dimensional barcode 220 in the reading field 703, and upon detecting the two-dimensional barcode 220, determines the content (i.e., the PIN of the construction machine 20) represented by the two-dimensional barcode 220. After that, the terminal control device 306 switches the screen back to the new registration screen 68 (indicated by an arrow A6 in Fig. 5), and displays the content (i.e., the PIN of the construction machine 20) of the read two-dimensional barcode 220 on the PIN entry field 682 (Figs. 7 and 10):

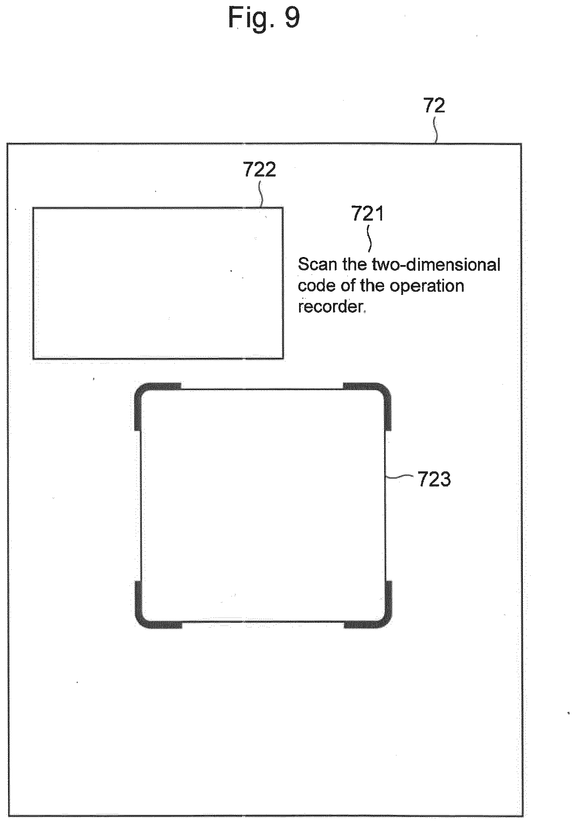

Fig. 9 is a view illustrating an example of the communication address reading screen 72 of the present embodiment. As described above, when the user selects (i.e., taps) the second barcode entry button 687 on the new construction machine registration screen 68 (Fig. 7), the communication address reading screen 72 is displayed on the display device 310 (indicated by the arrow A7 in Fig. 5). The communication address reading screen 72 is a screen for automatically entering the communication address (i.e., information related to the access password) of the wireless LAN device 204 using the two-dimensional barcode 222 of the second product label 210 on the construction machine 20 as a new monitoring target. The communication address reading screen 72 includes an operation description 721, an operation description image 722, and a two-dimensional barcode reading field 723.

The operation description 721 is the description of an operation that can be performed by the user, and displays "[S]can the two-dimensional code of the operation recorder." in the example of Fig. 9. The operation description image 722 is an image representing the position of the two-dimensional barcode 222 to be read (the illustration of the image is omitted in Fig. 9). The two-dimensional barcode reading field 723 is a portion where a video etc. captured with the second camera 300 is displayed. The video etc. captured with the second camera 300 may also be displayed around the reading field 723. The terminal control device 306 determines if there is the two-dimensional barcode 222 in the reading field 723, and upon detecting the two-dimensional barcode 222, determines the content (i.e., the communication address) represented by the two-dimensional barcode 222. After that, the terminal control device 306 switches the screen back to the new registration screen 68 (indicated by an arrow A8 in Fig. 5), and displays the content (i.e., the communication address) of the read two-dimensional barcode 222 on the communication address entry field 683 (Figs. 7 and 10).

Fig. 10 is a view illustrating a second example of the new construction machine registration screen 68 of the present embodiment. The display content in Fig. 10 is basically the same as that in Fig. 7. However, in the example of Fig. 10, the keyboard display 688 is displayed. In addition, in the example of Fig. 10, the registration button 685 is selectable (i.e., active) since the PIN of the construction machine 20 and the communication address are entered. The communication address of the present embodiment is a MAC address as seen from the communication address in Fig. 10.

As described above, when the registration button 685 in an active state is tapped, the terminal control device 306 completes the input on the new construction machine registration screen 68. Specifically, the terminal control device 306 stores in the terminal storage device 308 the PIN entered in the PIN entry field 682 and communication address entered in the communication address entry field 683. Then, the terminal control device 306 switches the screen back to the construction machine list screen 66 (see Fig. 6; indicated by the arrow A9 in Fig. 5), and displays the construction machine description 664, the construction machine icon 665, and the editing button 666 corresponding to the currently entered construction machine 20.

In the present embodiment, a combination of the PIN of the construction machine 20 and the type code of the construction machine 20 is set as the access ID (specifically, SSID: Service Set Identifier) for the wireless LAN device 204 (or the video recording unit 230). The type code can be determined from the PIN of the construction machine 20. Therefore, the terminal control device 306 determines the type code of the construction machine 20 from the PIN of the construction machine 20 to generate the access ID for the wireless LAN device 204, and store it (alternatively, the access ID may be generated from the PIN of the construction machine 20 upon reception of a video of the peripheral region). As described above, the type code may also be obtained by inquiring of the management server 40. Note that the two-dimensional barcode 220 may represent the access ID (i.e., a combination of the PIN and the type code).

In the present embodiment, the communication address of the wireless LAN device 204 is set as is as the initial value of the access password (i.e., the initial password) for the wireless LAN device 204 (or the video recording unit 230). Therefore, the terminal control device 306 stores the communication address of the wireless LAN device 204 as the access password in advance (the access password can be changed as described below).

Referring back to Fig. 6, when the construction machine description 664 or the construction machine icon 665 is selected (i.e., double-tapped), the terminal control device 306 starts a process for monitoring a video of the peripheral region of the corresponding construction machine 20 as described above. Specifically, the terminal control device 306 attempts to access the video recording unit 230 using the access ID and the access password for the video recording unit 230 (or the wireless LAN device 204) of the selected construction machine 20. Before attempting the access, an access start checking screen (not illustrated) may be displayed to allow the user of the portable terminal 30 to check if the access has started.

When the access is started successfully, the terminal control device 306 obtains recorded video list information from the video recording unit 230. Besides, the terminal control device 306 switches the screen from the construction machine list screen 66 to the monitoring management screen 74 (indicated by an arrow A10 in Fig. 5).

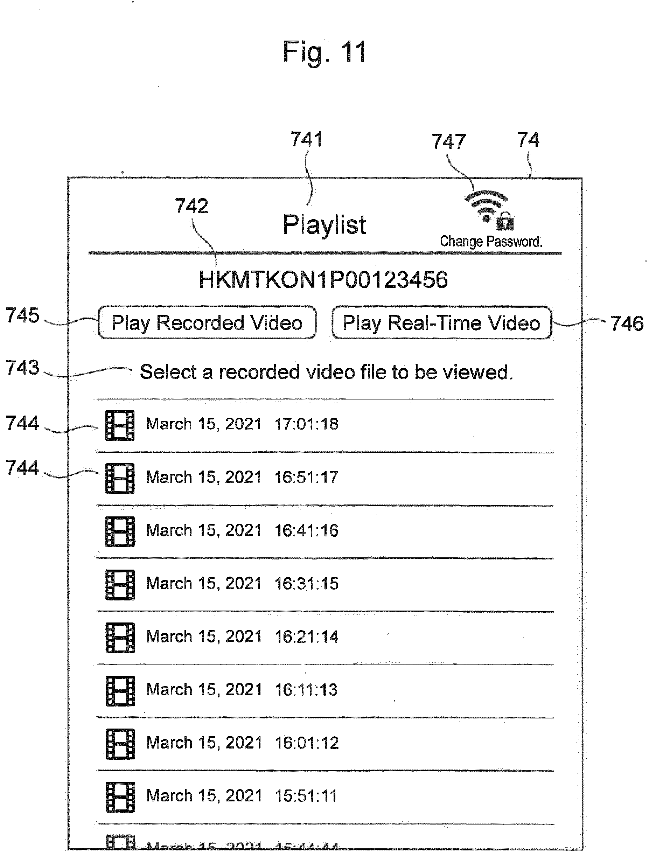

Fig. 11 is a view illustrating an example of the monitoring management screen 74 of the present embodiment. As described above, when the user selects (i.e., double-taps) the construction machine description 664 or the construction machine icon 665 on the construction machine list screen 66 (Fig. 6), the monitoring management screen 74 is displayed on the display device 310 (indicated by the arrow A10 in Fig. 5). The monitoring management screen 74 is a screen for managing monitoring of a video of the peripheral region of the construction machine 20. As illustrated in Fig. 11, the monitoring management screen 74 includes a screen title 741, a construction machine description 742, an operation description 743, recorded video file displays 744, a recorded-video play button 745, a real-time video play button 746, and a password changing button 747.

The screen title 741 indicates the overview of the monitoring management screen 74, and displays "Playlist" in the example of Fig. 11. The construction machine description 742 is a description for identifying the target construction machine 20, and displays the PIN of the construction machine 20 in the example of Fig. 11. When information on the target construction machine 20 is stored in the construction machine DB 408 of the management server 40, the terminal control device 306 may obtain the information from the management server 40, and display, instead of the PIN of the construction machine 20, the model name and the machine number of the construction machine 20 corresponding to the PIN.

The operation description 743 is the description of an operation that can be performed by the user, and displays "[S]elect a recorded video file to be viewed." in the example of Fig. 11. Each recorded video file display 744 is a display indicating a recorded video file that can be played (or downloaded).

The recorded-video play button 745 is a button for instructing that, when the recorded-video play button 745 is selected (i.e., tapped) while any one of the recorded video file displays 744 is selected, the selected recorded video file display 744 be played (or downloaded). When the recorded-video play button 745 is selected (i.e., tapped), the terminal control device 306 requests the video recording unit 230 to provide a recorded video file corresponding to the selected recorded video file display 744, and thus downloads (or receives) the recorded video file from the video recording unit 230. At this time, a screen indicating that the recorded video file is being received may be displayed. Upon completion of the download of the recorded video file, the terminal control device 306 displays a recorded-video play screen 76 (indicated by an arrow A11 in Fig. 5) to play the recorded video file. When a return button (not illustrated) is selected (i.e., tapped) on the recorded-video play screen 76, the terminal control device 306 switches the screen from the recorded-video play screen 76 back to the monitoring management screen 74 (indicated by an arrow A12 in Fig. 5).

The real-time video play button 746 in Fig. 11 is a button for instructing that a real-time video be displayed. When the real-time video play button 746 is selected (i.e., tapped), the terminal control device 306 requests the video recording unit 230 to provide a real-time video, and thus receives the real-time video from the video recording unit 230. The terminal control device 306 switches the screen from the monitoring management screen 74 to a real-time video display screen 78 (indicated by an arrow A13 in Fig. 5) so that the real-time video is displayed. When a return button (not illustrated) is tapped on the real-time video display screen 78, the terminal control device 306 switches the screen from the real-time video display screen 78 back to the monitoring management screen 74 (indicated by an arrow A14 in Fig. 5).

The password changing button 747 in Fig. 11 is a button for instructing that the communication password for the video recording unit 230 of the selected construction machine 20 be changed. When the password changing button 747 is selected (i.e., tapped), the terminal control device 306 displays a password changing screen 80 (indicated by an arrow A15 in Fig. 5).

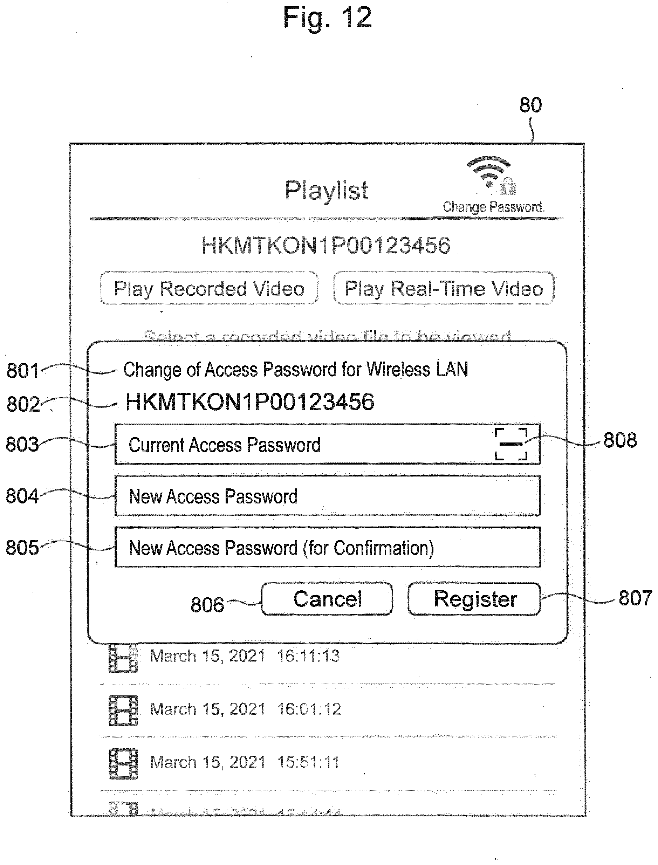

Fig. 12 is a view illustrating an example of the password changing screen 80 of the present embodiment. The password changing screen 80 is a screen for changing the communication password for the video recording unit 230 of the selected construction machine 20. The password changing screen 80 includes a screen title 801, a construction machine description 802, a current password entry field 803, a new password entry field 804, a new password entry field 805 for confirmation, a cancel button 806, and a change button 807.

The screen title 801 indicates the overview of the password changing screen 80, and displays "[C]hange of Access Password for Wireless LAN " in the example of Fig. 12. The construction machine description 802 is a description for identifying the target construction machine 20, and displays the PIN of the construction machine 20 in the example of Fig. 12. When information on the target construction machine 20 is stored in the construction machine DB 408 of the management server 40, the terminal control device 306 may obtain the information from the management server 40, and display, instead of the PIN of the construction machine 20, the model name and the machine number of the construction machine 20 corresponding to the PIN.

The current password entry field 803 is a field for entering the current access password for the selected construction machine 20. When the user selects (i.e., taps) the current password entry field 803, the terminal control device 306 displays a keyboard input display (not illustrated, which is similar to the keyboard display 688 in Fig. 10) below the password changing screen 80. The user is able to enter the current password by selecting each button in the keyboard display. A barcode entry button 808 is displayed at the right end of the current password entry field 803. When the user taps the barcode entry button 808, the terminal control device 306 causes the display device 310 to display a current password reading screen 82 (indicated by an arrow A16 in Fig. 5).

The current password reading screen 82 has the same content as the communication address reading screen 72 (Fig. 9). That is, the communication address (i.e., the MAC address) of the video recording unit 230 is used as the initial value of the communication password for the video recording unit 230 of the present embodiment. Therefore, when the current password remains unchanged from the initial value, the current password has the content indicated by the two-dimensional barcode 222 of the second product label 210 provided on the video recording unit 230. When the two-dimensional barcode 222 is read on the current password reading screen 82, the terminal control device 306 switches the screen back to the password changing screen 80 (indicated by an arrow A17 in Fig. 5). At this time, the content of the read two-dimensional barcode 222 is entered in the current password entry field 803 of the password changing screen 80. When the password has already been changed, the terminal control device 306 may omit the display of the barcode entry button 808. In such a case, the screen is not switched to the current password reading screen 82.

The new password entry field 804 is a field for entering a new access password for the selected construction machine 20. The new password entry field 805 for confirmation is a field for re-entering the new access password for the selected construction machine 20. When the user selects (i.e., taps) the new password entry field 804 or the new password entry field 805 for confirmation, the terminal control device 306 displays a keyboard input display (not illustrated, which is similar to the keyboard display 688 in Fig. 10) below the password changing screen 80. The user is able to enter the new password by selecting each button in the keyboard display.

The cancel button 806 is a button for interrupting the input on the password changing screen 80. The change button 807 is a button for completing the input on the password changing screen 80. The change button 807 cannot be selected when there is any entry field that is empty, and can be selected when all of the entry fields are filled. When the cancel button 806 or the change button 807 is selected (i.e., tapped), the screen is switched back to the monitoring management screen 74 (indicated by an arrow A18 in Fig. 5).

When a new password is set on the password changing screen 80, the following process is performed. That is, the terminal control device 306 transmits to the video recording unit 230 the current password and the new password together with an instruction to change the password. Upon receiving the instruction to change the password, the video recording unit 230 determines if the received current password matches the current password held in the video recording unit 230. If the two passwords match, the video recording unit 230 records the received new password as the current password to be used from now, and transmits to the terminal control device 306 a notice of the completion of the password change. Upon receiving the notice of the completion of the password change, the terminal control device 306 updates the new password as the current password.

When a machine list display button (not illustrated) is tapped on the monitoring management screen 74 (Fig. 6), the terminal control device 306 switches the screen from the monitoring management screen 74 to the construction machine list screen 66 (indicated by an arrow A19 in Fig. 5).

### [A-3. Advantageous effects of the present embodiment]

According to the present embodiment, information related to the access ID and information related to the access password (i.e., the two-dimensional barcodes 220 and 222) to be used for the portable terminal 30 (i.e., the monitoring device) to receive a video of the peripheral region of the construction machine 20 are both displayed on the construction machine 20. Therefore, the user of the portable terminal 30 is able to easily obtain the access ID and the access password, which can improve the convenience for the user.

The two-dimensional barcodes 220 and 222, which are respectively information related to the access ID and information related to the access password, are individually displayed on the first product label 208 (i.e., the first authentication-related information display portion) and the second product label 210 (i.e., the second authentication-related information display portion) (Figs. 3 and 4). This can enhance security in comparison with when the two-dimensional barcodes 220 and 222 are displayed on a single product label (i.e., an authentication-related information display portion). Further, the second product label 210 is arranged in the operator's cab of the construction machine 20. Therefore, under the conditions that the operator's cab is lockable, and the second product label 210 is arranged at a position not checkable from the outside of the operator's cab, the display (i.e., the information related to the access password) of the second product label 210 can be checked only while the operator's cab is locked. Thus, to receive a video of the peripheral region of the construction machine 20 using the portable terminal 30, the user of the portable terminal 30 is limited to a person authorized to enter the operator's cab of the construction machine 20 (i.e., a person who has the key of the construction machine 20), which can further enhance security.

In the present embodiment, the two-dimensional barcode 220 (i.e., the first authentication-related information) of the first product label 208 includes the PIN of the construction machine 20 (Fig. 3). In addition, the access ID for providing a video of the peripheral region includes a combination of the PIN of the construction machine 20 and a code representing the type of the construction machine 20. Accordingly, the user of the portable terminal 30 (i.e., the monitoring device) is able to easily enter the access ID.

In the present embodiment, information related to the access ID and information related to the access password are respectively displayed using the two-dimensional barcodes 220 and 222 on the first product label 208 (i.e., the first authentication-related information display portion) and the second product label 210 (i.e., the second authentication-related information display portion) (Figs. 3 and Fig. 4). In addition, the portable terminal 30 (i.e., the monitoring device) includes the second camera 300 that images the two-dimensional barcodes 220 and 222 (Fig. 2). Further, the terminal control device 306 (i.e., the monitoring control device) reads the two-dimensional barcodes 220 and 222 imaged by the second camera 300 to enter the access ID and the access password (Figs. 8 to 10). Accordingly, the user of the portable terminal 30 is able to easily enter the access ID and the access password.

In the present embodiment, the monitoring system 10 includes a plurality of construction machines 20 (Fig. 1). In addition, the portable terminal 30 (i.e., the monitoring device) displays a list of a plurality of construction machines 20 for each of which an access ID and an access password have been entered (Fig. 6). Further, the icon 665 representing the type of the body of each construction machine 20 is displayed on the list (Fig. 6). Accordingly, when there are a plurality of construction machines 20 that can be monitored, the user of the portable terminal 30 is able to easily identify the construction machine 20 that he/she wants to monitor.

In the present embodiment, the access ID (i.e., the identification information for providing a video of the peripheral region) includes the PIN of the construction machine 20. In addition, the monitoring system 10 includes the construction machine DB 408 that stores the PIN of each construction machine 20 and the model name and the machine number of the construction machine 20 corresponding to the PIN in association with each other (Fig. 2). Further, the portable terminal 30 (i.e., the monitoring device) can display, on the list of construction machines 20 (Fig. 6), the model name and the machine number of each construction machines 20 obtained from the construction machine DB 408. Accordingly, the user of the portable terminal 30 is able to more easily identify each construction machine 20 in comparison with when a list of the PINs of the construction machines 20 is displayed.

In the present embodiment, the construction machine 20 can transmit both a recorded video and a real-time video of the first camera 200 (Fig. 11). In addition, the portable terminal 30 (i.e., the monitoring device) displays the monitoring management screen 74 (i.e., the display selection screen) for selecting whether to display the recorded video or the real-time video (Fig. 11). Further, the portable terminal 30 displays the recorded video or the real-time video in accordance with the selection entered on the monitoring management screen 74 (indicated by the arrows A11 and A13 in Fig. 5). Accordingly, the user of the portable terminal 30 is able to monitor the construction machine 20 as a monitoring target by appropriately selecting the recorded video or the real-time video of the construction machine 20. Therefore, the convenience for the user of the portable terminal 30 can be increased.

In the present embodiment, the portable terminal 30 (i.e., the monitoring device) displays the password changing screen 80 (Fig. 12) for changing the access password (i.e., the password for receiving a video of the peripheral region). In addition, the portable terminal 30 transmits to the wireless LAN device 204 (i.e., the first wireless communication device) a new password entered on the password changing screen 80. Further, the wireless LAN device 204 uses the received new password. Accordingly, the password (i.e., the access password) for the wireless LAN device 204 of the construction machine 20 can be changed from the portable terminal 30, which can enhance security.

In the present embodiment, the construction machine 20 is provided with the initialization button 212 for initializing the access password (i.e., the password. for providing a video of the peripheral region) (Figs. 2 and 4). Accordingly, the password can be initialized as appropriate even when a new password is set via the portable terminal 30 (i.e., the monitoring device). Thus, even when there are a plurality of portable terminals 30, and a new password is set via one of the portable terminals 30 (i.e., a first portable terminal 30), while a user of another portable terminal 30 (i.e., a second portable terminal 30) does not know the new password, for example, such a circumstance can be addressed through initialization of the password.

In the present embodiment, the terminal control device 306 (i.e., the monitoring control device) causes the display device 310 to display the following (Fig. 5):
the PIN reading screen 70 (i.e., a first reading screen) that requests the second camera 300 to read the two-dimensional barcode 220 (i.e., information related to the access ID) displayed on the first product label 208 (i.e., the first authentication-related information display portion) arranged on the construction machine 20;
the communication address reading screen 72 (i.e., a second reading screen) that requests the second camera 300 to read the two-dimensional barcode 222 (i.e., information related to the access password) displayed on the second product label 210 (i.e., the second authentication-related information display portion) arranged on the construction machine 20;
the new construction machine registration screen 68 (i.e., an authentication screen) on which authentication for receiving a video of a peripheral region is performed by entering an access ID and an access password based on information on the two-dimensional barcodes 220 and 222 respectively read on the PIN reading screen 70 and the communication address reading screen 72; and
the recorded-video play screen 76 or the real-time video display screen 78 (i.e., a video display screen) that displays the video of the peripheral region when the access ID and the access password entered on the new registration screen 68 respectively match the true access ID and the true access password.

According to the present embodiment, when the two-dimensional barcode 220 (i.e., information related to the access ID) and the two-dimensional barcode 222 (i.e., information related to the access password) are individually displayed on the construction machine 20, an access ID and an access password can be easily entered. In addition, the portable terminal 30 (i.e., the monitoring device) according to the present embodiment can be used as a part of the highly secure monitoring system 10.

### <B. Modified example>

Needless to say, the present invention is not limited to the foregoing embodiment, and various configurations can be adopted based on the description of this specification. For example, the following configuration can be adopted.

### [B-1. Configuration]

### (B-1-1. Monitoring system 10)

In the foregoing embodiment, the monitoring system 10 includes a plurality of construction machines 20 and a plurality of portable terminals 30 (Fig. 1). However, the monitoring system 10 may include one construction machine 20 and a plurality of portable terminals 30, or may include a plurality of construction machines 20 and one portable terminal 30. Alternatively, the monitoring system 10 may include one construction machine 20 and one portable terminal 30.

### (B-1-2. Construction machine 20)

In the foregoing embodiment, the construction machine 20 (or the video recording unit 230) transmits to the portable terminal 30 both a moving image and a still image of the first camera 200 as a video of the peripheral region. However, the construction machine 20 (or the video recording unit 230) may be configured to transmit to the portable terminal 30 only one of a moving image or a still image.

In the foregoing embodiment, the construction machine 20 (or the video recording unit 230) transmits to the portable terminal 30 both a recorded video and a real-time video of the first camera 200 as a video of the peripheral region (Fig. 11). However, the construction machine 20 (or the video recording unit 230) may be configured to transmit to the portable terminal 30 only one of a recorded video or a real-time video. When only a real-time video is transmitted, the video recording device 202 need not be provided.

In the foregoing embodiment, the first product label 208 and the second product label 210 are respectively used as portions for displaying the two-dimensional barcodes 220 and 222 (i.e., the authentication-related information display portions) (Figs. 2 to 4). However, the present invention is not limited thereto from the perspective of displaying the two-dimensional barcodes 220 and 222, for example, and the two-dimensional barcodes 220 and 222 may be displayed in other portions.

In the foregoing embodiment, the first product label 208 is arranged outside the operator's cab, and the second product label 210 is arranged in the operator's cab. However, the present invention is not limited thereto from the perspective of displaying the access ID and the access password at different portions (i.e., at different authentication-related information display portions), for example. The first product label 208 may be arranged in the operator's cab, and the second product label 210 may be arranged outside the operator's cab. Alternatively, both the first product label 208 and the second product label 210 may be arranged in the operator's cab or outside the operator's cab.

In the foregoing embodiment, the password initialization button 212 is provided on the front face of the video recording unit 230 (Fig. 4), but it may be provided in other places.

### (B-1-3. Portable terminal 30 (i.e., monitoring device))

In the foregoing embodiment, the portable terminal 30 is used as a monitoring device that monitors a video of the peripheral region of the construction machine 20 (Figs. 1 and 2). However, the present invention is not limited thereto from the perspective of using the PIN of the construction machine 20 as the information related to the access ID, for example. For example, an information terminal (e.g., a desktop PC) other than the portable terminal 30 may be used as the monitoring device.

### (B-1-4. Management server 40)

In the foregoing embodiment, the monitoring system 10 includes the management server 40 (Fig. 1). However, the management server 40 may be omitted.

### [B-2. Control]

### (B-2-1. Communication between construction machine 20 and portable terminal 30)

The foregoing embodiment is based on the assumption that the construction machine 20 and the portable terminal 30 communicate with each other via a wireless LAN (i.e., Ethernet) (Fig. 1). However, the present invention is not limited thereto from the perspective of transmitting a video of the peripheral region to the portable terminal 30, for example. For example, the construction machine 20 and the portable terminal 30 can communicate with each other over the Internet.

### (B-2-2. Provision of video of peripheral region)

In the foregoing embodiment, a video of the peripheral region of the construction machine 20 is directly transmitted from the construction machine 20 to the portable terminal 30 (Figs. 1 and 2). However, the present invention is not limited thereto from the perspective of monitoring a video of the peripheral region with the portable terminal 30, for example. For example, the construction machine 20 may transmit a video of its peripheral region to the portable terminal 30 via the management server 40. In such a case, a recorded video may be recorded on not the video recording device 202 of the construction machine 20 but the storage device 406 of the management server 40. In addition, when a video of the peripheral region is transmitted via the management server 40, authentication of the access ID and the access password for allowing the portable terminal 30 to receive the video of the peripheral region may be performed by not the construction machine 20 but the management server 40.

### (B-2-3. Access ID and access password)

In the foregoing embodiment, a combination of the PIN of the construction machine 20 and the type code of the construction machine 20 is used as the access ID. However, the present invention is not limited thereto from the perspective of setting the access ID based on the PIN of the construction machine 20, for example. For example, the access ID may include only the PIN of the construction machine 20. Alternatively, the access ID may include a hash value based on the PIN of the construction machine 20. As a further alternative, for example, a value that is not related to the PIN of the construction machine 20 may be set as the access ID from the perspective of displaying one of the access ID or the access password on the first product label 208 and displaying the other on the second product label 210.

In the foregoing embodiment, the communication address (i.e., the MAC address) of the wireless LAN device 204 is used as the access password. However, the present invention is not limited thereto from the perspective of setting the initial access password based on the communication address of the wireless LAN device 204 (i.e., the first wireless communication device), for example. For example, the initial access password may include a combination of the communication address of the wireless LAN device 204 and the type code of the construction machine 20. Alternatively, the initial access password may include a hash value based on the communication address of the wireless LAN device 204. As a further alternative, for example, a value that is not related to the communication address of the wireless LAN device 204 may be set as the access password from the perspective of displaying one of the access ID or the access password on the first product label 208 and displaying the other on the second product label 210.

In the foregoing embodiment, a part of the access ID and the access password are respectively displayed using the two-dimensional barcodes 220 and 222 (Figs. 3 and Fig. 4). However, the present invention is not limited thereto from the perspective of individually displaying a part of the access ID and the access password, for example. For example, information related to the access ID or the access password may be displayed using a common character string that is not a barcode, or using a one-dimensional barcode.

### (B-2-4. Display screen of portable terminal 30)

In the foregoing embodiment, a list of construction machines 20 for each of which monitoring of a video of a peripheral region can be performed is displayed on the construction machine list screen 66 (Fig. 6). However, the present invention is not limited thereto from the perspective of monitoring a video of a peripheral region, for example. For example, a target construction machine 20 may be entered on the portable terminal 30 each time monitoring is performed.

In the construction machine list screen 66 (Fig. 6) of the foregoing embodiment, the icons 665 are displayed in addition to the construction machine descriptions 664. However, the icons 665 may be omitted.

The monitoring system 10 according to the present embodiment is adapted to allow a video of the peripheral region of the construction machine 20 to be displayed on the portable terminal (i.e., the monitoring device) 30 located outside the construction machine 20.

Specifically, the construction machine 20 includes:
the first camera 200 that images the peripheral region of the construction machine 20,
the video recording device 202 that records a moving image or a still image captured by the first camera 200 as a video of the peripheral region,
the wireless LAN device (i.e., the first wireless communication device) 204 that transmits to the portable terminal 30 or the external server 40 the video of the peripheral region recorded on the video recording device 202,
the first product label (i.e., the first authentication-related information display portion) 208 arranged outside an operator's cab of the construction machine 20, and displaying first authentication-related information related to one of identification information or a password for providing the video of the peripheral region, and
the second product label (i.e., the second authentication-related information display portion) 210 arranged in the operator's cab, and displaying second authentication-related information related to the other of the identification information or the password for providing the video of the peripheral region,

the portable terminal 30 includes:
   the second wireless communication device 302 that communicates with the construction machine 20 or the external server 40,
   the display device 310 that displays the video of the peripheral region received via the second wireless communication device 302, and
   the terminal control device (i.e., the monitoring control device) 306, and
the terminal control device 360 causes the display device 310 to display the following:
   the authentication screen 68 for entering identification information and a password for receiving the video of the peripheral region, and
   the recorded-video play screen 76 or the real-time video display screen 78 (i.e., the video display screen) that displays the video of the peripheral region when the identification information and the password entered on the authentication screen 68 respectively match the true identification information and the true password.

According to the present embodiment, the first and second authentication-related information, which are respectively related to the identification information (ID) and the password for allowing the portable terminal 30 to receive a video of the peripheral region of the construction machine 20, are both displayed on the construction machine 20. Therefore, a user of the portable terminal 30 is able to obtain the identification information and the password relatively easily, which can improve the convenience for the user.

In addition, the first and second authentication-related information, which are respectively related to the identification information and the password for providing a video of the peripheral region of the construction machine 20, are individually displayed on the first product label 208 and the second product label 210. This can enhance security in comparison with when the identification information and the password are displayed on a single authentication-related information display portion. Further, the second product label 210 is arranged in the operator's cab of the construction machine 20. Therefore, under the conditions that the operator's cab is lockable, and the second product label 210 is arranged at a position not checkable from the outside of the operator's cab, the display (i.e., the information related to the identification information or the password) of the second product label 210 can be checked only while the operator's cab is locked. Thus, to receive a video of the peripheral region of the construction machine 20 using the portable terminal 30, the user of the portable terminal 30 is limited to a person authorized to enter the operator's cab of the construction machine 20 (i.e., a person who has the key of the construction machine), which can further enhance security.

The first authentication-related information may include the identification number of the construction machine 20. The identification information for providing a video of the peripheral region may include a combination of the identification number of the construction machine 20 and a code representing the type of the construction machine 20. Accordingly, the user of the portable terminal 30 is able to easily enter the identification information for receiving a video of the peripheral region.

The first authentication-related information and the second authentication-related information may be respectively displayed using the two-dimensional barcodes 220 and 222 on the first product label 208 and the second product label 210. In addition, the portable terminal 30 may include the second camera 300 that images the two-dimensional barcodes 220 and 222. Further, the terminal control device 306 may read the two-dimensional barcodes 220 and 222 imaged by the second camera 300 to enter identification information and a password for receiving a video of the peripheral region based on the first authentication-related information and the second authentication-related information. Accordingly, the user of the portable terminal 30 is able to easily enter the identification information and the password for receiving a video of the peripheral region.

The monitoring system 10 may include a plurality of construction machines 20. In addition, the portable terminal 30 may display on the construction machine list screen (i.e., the list) 66 a plurality of construction machines 20 for each of which identification information and a password for providing a video of a peripheral region have been entered. Further, an icon representing the type of the body of each construction machine 20 may be displayed on the construction machine list screen 66. Accordingly, when there are a plurality of construction machines 20 that can be monitored, the user of the portable terminal 30 is able to easily identify the construction machine 20 that he/she wants to monitor.

The identification information for providing a video of the peripheral region may include the identification number of the construction machine 20. In addition, the monitoring system 10 may further include the construction machine database 408 that stores the identification number of each construction machine 20 and the model name and the machine number of the construction machine 20 corresponding to the identification number in association with each other. Further, the portable terminal 30 may display, on the list of construction machines 20, the model name and the machine number of each construction machine 20 obtained from the construction machine database 408. Accordingly, the user of the portable terminal 30 is able to more easily identify each construction machine 20 in comparison with when a list of the identification numbers of the construction machines 20 is displayed.

The construction machine 20 may be able to transmit both a recorded video and a real-time video of the first camera 200. In addition, the portable terminal 30 may display the display selection screen 74 for selecting whether to display the recorded video or the real-time video. Further, the portable terminal 30 may display the recorded video or the real-time video in accordance with the selection entered on the display selection screen 74. Accordingly, the user of the portable terminal 30 is able to monitor the construction machine 20 as a monitoring target by appropriately selecting the recorded video or the real-time video of the construction machine 20. Therefore, the convenience for the user of the portable terminal 30 can be increased.

The portable terminal 30 may display the password changing screen 80 for changing the password for receiving a video of the peripheral region. In addition, the portable terminal 30 may transmit to the wireless LAN device 204 a new password entered on the password changing screen 80. Further, the wireless LAN device 204 may use the received new password. Accordingly, the password of the wireless LAN device 204 of the construction machine 20 can be changed from the portable terminal 30, which can enhance security.

The construction machine 20 may be provided with the password initialization button (i.e., the initialization button) 212 for initializing the password for providing a video of the peripheral region. Accordingly, the password can be initialized as appropriate even when a new password is set via the portable terminal 30. Thus, even when there are a plurality of portable terminals 30, and a new password is set via one of the portable terminals 30 (i.e., the first portable terminal), while a user of another portable terminal 30 (i.e., the second portable terminal) does not know the new password, for example, such a circumstance can be addressed through initialization of the password.

The portable terminal 30 according to the present embodiment is adapted to receive a video of the peripheral region of the construction machine 20, and display the received video.

Specifically, the portable terminal 30 includes:
the second camera 300,
the second wireless communication device 302 that communicates with the construction machine 20 or the external server 40,
the display device 310 that displays the video of the peripheral region received via the second wireless communication device 302, and
the terminal control device (i.e., the monitoring control device) 306, and
the terminal control device 306 causes the display device 310 to display the following:
the first reading screen 70 that requests the second camera 300 to read the first authentication-related information, which is related to one of the identification information or the password for providing the video of the peripheral region, displayed on the first product label 208 arranged on the construction machine 20,
the second reading screen 72 that requests the second camera 300 to read the second authentication-related information, which is related to the other of the identification information or the password for providing the video of the peripheral region, displayed on the second product label 210 arranged on the construction machine 20,
the authentication screen 68 on which authentication for receiving the video of the peripheral region is performed by entering identification information and a password for receiving the video of the peripheral region based on the first authentication-related information read on the first reading screen 70 and the second authentication-related information read on the second reading screen 72, and
the recorded-video play screen 76 or the real-time video display screen 78 (i.e., the video display screen) that displays the video of the peripheral region when the identification information and the password entered on the authentication screen 68 match the true identification information and the true password.

According to the portable terminal 30 of the present embodiment, when the first authentication-related information, which is related to one of the identification information or the password for providing a video of the peripheral region of the construction machine 20, and the second authentication-related information, which is related to the other of the identification information or the password, are individually displayed on the construction machine 20, identification information and a password can be easily entered. In addition, the portable terminal 30 can be used as a part of the highly secure monitoring system.

The construction machine 20 according to the present embodiment can transmit to an external device a video of the peripheral region of the construction machine 20.

Specifically, the construction machine 20 includes:
the first camera 200 that captures a video of the peripheral region,
the video recording device 202 that records a moving image or a still image captured with the first camera 200 as a video of the peripheral region,
the wireless LAN device 204 that transmits to an external device, such as the portable terminal 30, the video of the peripheral region recorded on the video recording device 202,
the first product label 208 arranged outside an operator's cab of the construction machine 20, and displaying the first authentication-related information related to one of the identification information or the password for providing the video of the peripheral region, and
the second product label 210 arranged in the operator's cab, and displaying the second authentication-related information related to the other of the identification information or the password for providing the video of the peripheral region.

Although the embodiments of the present invention have been described in detail above, the present invention is not limited thereto, and various design changes can be made without departing from the scope of the present invention recited in the claims.

### Reference Signs List

- 10: Monitoring system
- 20: Construction machine
- 30: Portable terminal (i.e., monitoring device)
- 40: Management server (i.e., external server)
- 68: New construction machine registration screen (i.e., authentication screen)
- 70: PIN reading screen (i.e., first reading screen)
- 72: Communication address reading screen (i.e., second reading screen)
- 74: Monitoring management screen (i.e., display selection screen)
- 76: Recorded-video play screen (i.e., video display screen)
- 78: Real-time video display screen (i.e., video display screen)
- 80: Password changing screen
- 200: First camera
- 202: Video recording device
- 204: Wireless LAN device (i.e., first wireless communication device)
- 208: First product label (i.e., first authentication-related information display portion)
- 210: Second product label (i.e., second authentication-related information display portion)
- 212: Password initialization button
- 220, 222: Two-dimensional barcode
- 300: Second camera
- 302: Second wireless communication device
- 306: Terminal control device (i.e., monitoring control device)
- 310: Display device
- 408: Construction machine database
- 665: Icon

## Claims

1. A monitoring system for allowing a video of a peripheral region of a construction machine (20) to be displayed on a monitoring device (30) located outside the construction machine (20),
wherein:
the construction machine (20) includes
a first camera (200) that is disposed on a body of the construction machine (20) and that images the peripheral region of the construction machine (20),
a video recording device (202) that records a moving image or a still image captured by the first camera (200) as a video of the peripheral region,
a first wireless communication device that transmits to the monitoring device (30) or an external server (40) the video of the peripheral region recorded on the video recording device (202), **characterized by**
a first product label attached to a part of the construction machine (20) outside an operator's cab of the construction machine (20), and displaying first authentication-related information related to one of identification information or a password for providing the video of the peripheral region, and
a second product label arranged in the operator's cab, and displaying second authentication-related information related to another of the identification information or the password for providing the video of the peripheral region,
the monitoring device (30) includes
a second wireless communication device that communicates with the construction machine (20) or the external server (40),
a display device that displays the video of the peripheral region received via the second wireless communication device, and
a monitoring control device, and
the monitoring control device causes the display device to display
an authentication screen (68) for entering identification information and a password for receiving the video of the peripheral region, and
a video display screen that displays the video of the peripheral region when the identification information and the password entered on the authentication screen (68) respectively match true identification information and a true password.

2. The monitoring system according to claim **1,**
wherein:
the first authentication-related information includes an identification number of the construction machine (20), and
the identification information for providing the video of the peripheral region includes a combination of the identification number of the construction machine (20) and a code representing a type of the construction machine (20).

3. The monitoring system according to claim 1 or 2,
wherein:
the first product label and the second product label are respectively displayed using two-dimensional barcodes on the first authentication-related information display portion and the second authentication-related information display portion,
the monitoring device (30) includes a second camera (300) that images the two-dimensional barcodes, and
the monitoring control device reads the two-dimensional barcodes imaged by the second camera (300) to enter identification information and a password for receiving the video of the peripheral region on the authentication screen (68) based on the first authentication-related information and the second authentication-related information.

4. The monitoring system according to any one of claims 1 to 3,
wherein:
the monitoring system includes a plurality of construction machines (20),
the monitoring device (30) displays a list of the plurality of construction machines (20) for each of which identification information and a password for providing a video of a peripheral region have been entered, and
an icon representing a type of a body of each construction machine (20) is displayed on the list.

5. The monitoring system according to claim 4,
wherein:
the identification information for providing the video of the peripheral region includes an identification number of the construction machine (20),
the monitoring system further includes a construction machine (20) database that stores the identification number of each construction machine (20) and a model name and a machine number of the construction machine (20) corresponding to the identification number in association with each other, and
the monitoring device (30) displays on the list of the construction machines (20) the model name and the machine number of each construction machine (20) obtained from the construction machine database.

6. The monitoring system according to any one of claims 1 to 5,
wherein:
the construction machine (20) is capable of transmitting both a recorded video and a real-time video of the first camera (200), and
the monitoring device (30) performs the following:
displaying a display selection screen (74) to select whether to display the recorded video or the real-time video, and
displaying the recorded video or the real-time video in accordance with a selection entered on the display selection screen (74).

7. The monitoring system according to any one of claims 1 to 6,
wherein:
the monitoring device (30) performs the following:
displaying a password changing screen to change the password for receiving the video of the peripheral region, and
transmitting a new password entered on the password changing screen to the first wireless communication device, and
the first wireless communication device uses the received new password.

8. The monitoring system according to claim 7, wherein the construction machine (20) is provided with an initialization button to initialize the password for providing the video of the peripheral region.

## Patentansprüche

1. Überwachungssystem zum Ermöglichen, dass ein Video eines peripheren Bereichs einer Baumaschine (20) auf einer Überwachungsvorrichtung (30) angezeigt wird, die sich außerhalb der Baumaschine (20) befindet,
wobei:
die Baumaschine (20) umfasst
eine erste Kamera (200), die an einem Körper der Baumaschine (20) angeordnet ist und den peripheren Bereich der Baumaschine (20) abbildet,
eine Videoaufzeichnungsvorrichtung (202), die ein Bewegtbild oder ein Standbild, das von der ersten Kamera (200) aufgenommen wird, als ein Video des peripheren Bereichs aufzeichnet,
eine erste drahtlose Kommunikationsvorrichtung, die das Video des peripheren Bereichs, das auf der Videoaufzeichnungsvorrichtung (202) aufgezeichnet ist, an die Überwachungsvorrichtung (30) oder einen externen Server (40) überträgt, **gekennzeichnet durch**
ein erstes Produktetikett, das an einem Teil der Baumaschine (20) außerhalb einer Bedienerkabine der Baumaschine (20) angebracht ist und erste authentifizierungsbezogene Informationen anzeigt, die sich auf eines von Identifikationsinformationen oder einem Passwort zum Bereitstellen des Videos des peripheren Bereichs beziehen, und
ein zweites Produktetikett, das in der Bedienerkabine angeordnet ist und zweite authentifizierungsbezogene Informationen anzeigt, die sich auf ein anderes der Identifikationsinformationen oder des Passworts zum Bereitstellen des Videos des peripheren Bereichs beziehen,
die Überwachungsvorrichtung (30) umfasst
eine zweite drahtlose Kommunikationsvorrichtung, die mit der Baumaschine (20) oder dem externen Server (40) kommuniziert,
eine Anzeigevorrichtung, die das Video des peripheren Bereichs anzeigt, das über die zweite drahtlose Kommunikationsvorrichtung empfangen wird, und
eine Überwachungssteuervorrichtung, und
die Überwachungssteuervorrichtung bewirkt, dass die Anzeigevorrichtung anzeigt
einen Authentifizierungsbildschirm (68) zum Eingeben von Identifikationsinformationen und eines Passworts zum Empfangen des Videos des peripheren Bereichs, und
einen Videoanzeigebildschirm, der das Video des peripheren Bereichs anzeigt, wenn die Identifikationsinformationen und das Passwort, die auf dem Authentifizierungsbildschirm (68) eingegeben werden, jeweils mit echten Identifikationsinformationen und einem echten Passwort übereinstimmen.

2. Überwachungssystem nach Anspruch 1,
wobei:
die ersten authentifizierungsbezogenen Informationen eine Identifikationsnummer der Baumaschine (20) umfassen, und
die Identifikationsinformationen zum Bereitstellen des Videos des peripheren Bereichs eine Kombination der Identifikationsnummer der Baumaschine (20) und eines Codes umfassen, der einen Typ der Baumaschine (20) darstellt.

3. Überwachungssystem nach Anspruch 1 oder 2,
wobei:
das erste Produktetikett und das zweite Produktetikett jeweils unter Verwendung zweidimensionaler Strichcodes auf dem ersten anzeigeabschnitt für authentifizierungsbezogene Informationen und dem zweiten anzeigeabschnitt für authentifizierungsbezogene Informationen angezeigt werden,
die Überwachungsvorrichtung (30) eine zweite Kamera (300) umfasst, die die zweidimensionalen Strichcodes abbildet, und
die Überwachungssteuervorrichtung die zweidimensionalen Strichcodes, die von der zweiten Kamera (300) abgebildet werden, liest, um Identifikationsinformationen und ein Passwort zum Empfangen des Videos des peripheren Bereichs auf dem Authentifizierungsbildschirm (68) basierend auf den ersten authentifizierungsbezogenen Informationen und den zweiten authentifizierungsbezogenen Informationen einzugeben.

4. Überwachungssystem nach einem der Ansprüche 1 bis 3,
wobei:
das Überwachungssystem eine Vielzahl von Baumaschinen (20) umfasst,
die Überwachungsvorrichtung (30) eine Liste der Vielzahl von Baumaschinen (20) anzeigt, für die jeweils Identifikationsinformationen und ein Passwort zum Bereitstellen eines Videos eines peripheren Bereichs eingegeben wurden, und
ein Symbol, das einen Typ eines Körpers jeder Baumaschine (20) darstellt, auf der Liste angezeigt wird.

5. Überwachungssystem nach Anspruch 4,
wobei:
die Identifikationsinformationen zum Bereitstellen des Videos des peripheren Bereichs eine Identifikationsnummer der Baumaschine (20) umfassen,
das Überwachungssystem ferner eine Baumaschinen(20)-Datenbank umfasst, die die Identifikationsnummer jeder Baumaschine (20) und einen Modellnamen und eine Maschinennummer der Baumaschine (20), die der Identifikationsnummer entsprechen, in Verbindung miteinander speichert, und
die Überwachungsvorrichtung (30) auf der Liste der Baumaschinen (20) den Modellnamen und die Maschinennummer jeder Baumaschine (20) anzeigt, die aus der Baumaschinen-Datenbank erhalten werden.

6. Überwachungssystem nach einem der Ansprüche 1 bis 5,
wobei:
die Baumaschine (20) in der Lage ist, sowohl ein aufgezeichnetes Video als auch ein Echtzeitvideo der ersten Kamera (200) zu übertragen, und
die Überwachungsvorrichtung (30) Folgendes durchführt:
Anzeigen eines Anzeigeauswahlbildschirms (74), um auszuwählen, ob das aufgezeichnete Video oder das Echtzeitvideo angezeigt werden soll, und
Anzeigen des aufgezeichneten Videos oder des Echtzeitvideos gemäß einer Auswahl, die auf dem Anzeigeauswahlbildschirm (74) eingegeben wird.

7. Überwachungssystem nach einem der Ansprüche 1 bis 6,
wobei:
die Überwachungsvorrichtung (30) Folgendes durchführt:
Anzeigen eines Passwortänderungsbildschirms, um das Passwort zum Empfangen des Videos des peripheren Bereichs zu ändern, und
Übertragen eines neuen Passworts, das auf dem Passwortänderungsbildschirm eingegeben wird, an die erste drahtlose Kommunikationsvorrichtung, und
die erste drahtlose Kommunikationsvorrichtung das empfangene neue Passwort verwendet.

8. Überwachungssystem nach Anspruch 7, wobei die Baumaschine (20) mit einer Initialisierungstaste versehen ist, um das Passwort zum Bereitstellen des Videos des peripheren Bereichs zu initialisieren.

## Revendications

1. Système de surveillance pour permettre à une vidéo d'une région périphérique d'une machine de construction (20) d'être affichée sur un dispositif de surveillance (30) situé à l'extérieur de la machine de construction (20),
dans lequel :
la machine de construction (20) comprend
une première caméra (200) qui est disposée sur un corps de la machine de construction (20) et qui image la région périphérique de la machine de construction (20),
un dispositif d'enregistrement vidéo (202) qui enregistre une image animée ou une image fixe capturée par la première caméra (200) en tant que vidéo de la région périphérique,
un premier dispositif de communication sans fil qui transmet au dispositif de surveillance (30) ou à un serveur externe (40) la vidéo de la région périphérique enregistrée sur le dispositif d'enregistrement vidéo (202), **caractérisé par**
une première étiquette de produit fixée à une partie de la machine de construction (20) à l'extérieur d'une cabine d'opérateur de la machine de construction (20), et affichant des premières informations liées à l'authentification liées à l'un parmi des informations d'identification ou un mot de passe pour fournir la vidéo de la région périphérique, et
une seconde étiquette de produit agencée dans la cabine d'opérateur, et affichant des secondes informations liées à l'authentification liées à un autre parmi les informations d'identification ou le mot de passe pour fournir la vidéo de la région périphérique,
le dispositif de surveillance (30) comprend
un second dispositif de communication sans fil qui communique avec la machine de construction (20) ou le serveur externe (40),
un dispositif d'affichage qui affiche la vidéo de la région périphérique reçue via le second dispositif de communication sans fil, et
un dispositif de commande de surveillance, et
le dispositif de commande de surveillance amène le dispositif d'affichage à afficher
un écran d'authentification (68) pour entrer des informations d'identification et un mot de passe pour recevoir la vidéo de la région périphérique, et
un écran d'affichage vidéo qui affiche la vidéo de la région périphérique lorsque les informations d'identification et le mot de passe entrés sur l'écran d'authentification (68) correspondent respectivement à des informations d'identification vraies et à un mot de passe vrai.

2. Système de surveillance selon la revendication 1,
dans lequel :
les premières informations liées à l'authentification comprennent un numéro d'identification de la machine de construction (20), et
les informations d'identification pour fournir la vidéo de la région périphérique comprennent une combinaison du numéro d'identification de la machine de construction (20) et d'un code représentant un type de la machine de construction (20).

3. Système de surveillance selon la revendication 1 ou 2,
dans lequel :
la première étiquette de produit et la seconde étiquette de produit sont respectivement affichées en utilisant des codes-barres bidimensionnels sur la première partie d'affichage d'informations liées à l'authentification et la seconde partie d'affichage d'informations liées à l'authentification,
le dispositif de surveillance (30) comprend une seconde caméra (300) qui image les codes-barres bidimensionnels, et
le dispositif de commande de surveillance lit les codes-barres bidimensionnels imagés par la seconde caméra (300) pour entrer des informations d'identification et un mot de passe pour recevoir la vidéo de la région périphérique sur l'écran d'authentification (68) sur la base des premières informations liées à l'authentification et des secondes informations liées à l'authentification.

4. Système de surveillance selon l'une quelconque des revendications 1 à 3,
dans lequel :
le système de surveillance comprend une pluralité de machines de construction (20),
le dispositif de surveillance (30) affiche une liste de la pluralité de machines de construction (20) pour chacune desquelles des informations d'identification et un mot de passe pour fournir une vidéo d'une région périphérique ont été entrés, et
une icône représentant un type d'un corps de chaque machine de construction (20) est affichée sur la liste.

5. Système de surveillance selon la revendication 4,
dans lequel :
les informations d'identification pour fournir la vidéo de la région périphérique comprennent un numéro d'identification de la machine de construction (20),
le système de surveillance comprend en outre une base de données de machines de construction (20) qui stocke le numéro d'identification de chaque machine de construction (20) et un nom de modèle et un numéro de machine de la machine de construction (20) correspondant au numéro d'identification en association l'un avec l'autre, et
le dispositif de surveillance (30) affiche sur la liste des machines de construction (20) le nom de modèle et le numéro de machine de chaque machine de construction (20) obtenus à partir de la base de données de machines de construction.

6. Système de surveillance selon l'une quelconque des revendications 1 à 5,
dans lequel :
la machine de construction (20) est capable de transmettre à la fois une vidéo enregistrée et une vidéo en temps réel de la première caméra (200), et
le dispositif de surveillance (30) effectue ce qui suit :
l'affichage d'un écran de sélection d'affichage (74) pour sélectionner s'il faut afficher la vidéo enregistrée ou la vidéo en temps réel, et
l'affichage de la vidéo enregistrée ou de la vidéo en temps réel conformément à une sélection entrée sur l'écran de sélection d'affichage (74).

7. Système de surveillance selon l'une quelconque des revendications 1 à 6,
dans lequel :
le dispositif de surveillance (30) effectue ce qui suit :
l'affichage d'un écran de changement de mot de passe pour changer le mot de passe pour recevoir la vidéo de la région périphérique, et
la transmission d'un nouveau mot de passe entré sur l'écran de changement de mot de passe au premier dispositif de communication sans fil, et
le premier dispositif de communication sans fil utilise le nouveau mot de passe reçu.

8. Système de surveillance selon la revendication 7, dans lequel la machine de construction (20) est pourvue d'un bouton d'initialisation pour initialiser le mot de passe pour fournir la vidéo de la région périphérique.
